# EUROPEAN PATENT SPECIFICATION

(11) **EP 4 444 638 B1**
(45) Date of publication and mention of the grant of the patent: **05.08.2026**
(21) Application number: 22844303.2
(22) Date of filing: 06.12.2022
(51) Int. Cl.: B65G 1/04

(54) **AUTOMATED SYSTEM FOR STORING ELONGATED OBJECTS THAT CAN BE FED TO, AND FROM, A USER**
AUTOMATISIERTES SYSTEM ZUR LAGERUNG VON LÄNGLICHEN, EINEM BENUTZER ZU- UND VON IHM ZU VERSORGENDEN OBJEKTEN
SYSTÈME AUTOMATISÉ DE STOCKAGE D'OBJETS ALLONGÉS POUVANT ÊTRE ENVOYÉS À UN UTILISATEUR ET À PARTIR DE CELUI-CI

(30) Priority: 10.12.2021 IT 202100031052
(43) Date of publication of application: 16.10.2024
(73) Proprietor: METAL ART DI FRANCO E MAURO TRANQUILLI S.R.L., 60019 Senigallia (IT)
(72) Inventor: TRANQUILLI, Franco, 60019 Senigallia (AN) (IT)
(74) Representative: Palestrini, Mauro
(86) International application number: PCT/IT2022/050316
(87) International publication number: WO 2023/105542

(56) References cited:
- WO-A1-2019/201716
- WO-A1-2022/024154
- JP-A- H 092 475
- JP-U- S5 696 027

## Description

### Technical Field

The present invention relates to an automated system for storing and feeding elongated objects that can be fed to, and from, a user, such as a machine tool.

### Prior Art Technology

In the field of mechanical processing relating to the shaping of objects by removing materials from elongated semi-finished products such as bars or tubes using machine tools, the prior art recognises the use of warehouses to stock semi-finished products which are structured to accommodate elongated semi-finished products lying horizontally of their own longitudinal dimension.

Normally, the semi-finished products are received by the user in the form of bundles, which, as such, or allocated inside suitable crates, are stored in warehouses and, if necessary, are taken from them and transferred to the user machines with the help of lifting equipment, such as fixed overhead or movable wheel cranes and/or even other lifting and transportation means, such as forklifts.

This process entails some significant drawbacks. Indeed, the horizontal storage of semi-finished products, no matter how they are processed, either as individual units or in the form of collective bundles, entails a very inefficient occupation of space since space occupied horizontally is far greater than that occupied vertically. This results in a reduced quantity of usefully stocked materials per square metre of the horizontal area allocated for this purpose.

An alternative prior art method is described and illustrated in document JPH092475.

Document JPS5696027U discloses the features of the preamble of claim 1.

Moreover, the movement of semi-finished products to and from warehouses by general, multi-purpose and unspecialised operative means entails the inefficient management of materials in terms of speed and adequacy of operational response, which are ill-suited to the need to rapidly supply the machine tools used in modern production facilities.

Yet another drawback is the fact that the operative means in the prior art are incapable of loading semi-finished products directly into the machine, thus making it necessary to employ specialised loaders from time to time according to the type of machine served; moreover, these loaders often require the involvement of human operators.

### Background of the Invention

The aim of the present invention is, therefore, to eliminate the above-mentioned drawbacks by solving the problem of how to provide a method for the storage, handling and delivery of elongated semi-finished products to machine tools, and a relative system actuating such a method, characterised by providing for a very efficient occupation of space, thus resulting in a reduction of the horizontal surfaces allocated for storage; a rapid and adequate ability to meet the needs of the operating machines served; and a high degree of operational flexibility according to the type of the above-mentioned machines and/or the type of arrangement and orientation of the machines in the planimetric framework of a generic production department in which they are allocated.

In accordance with the invention, these aims and outcomes are achieved by a system and a method as defined in the claims attached.

### Brief Description of the Drawings

Further characteristics and advantages of the invention will be made clearer from the detailed description of an exemplary, non-limited contraption illustrated in the accompanying drawings, wherein:

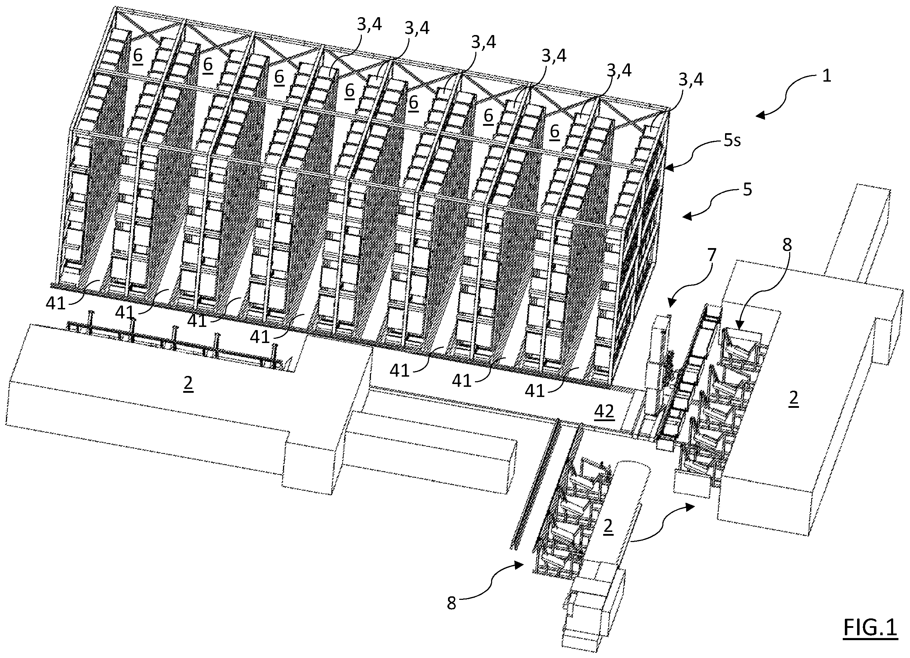

- Figure 1 is an overall perspective three-dimensional view of a system according to the invention;
- Figure 2 is an overall perspective three-dimensional view of a warehouse for the system according to Figure 1;
- Figure 3 is a perspective three-dimensional view of a component of the invention, shown with some parts removed to better demonstrate others;
- Figure 4 is a perspective three-dimensional view of a component of Figure 3 operatively interconnected with other components of the system;
- Figure 5 shows, in a perspective three-dimensional view, a manipulator specifically designed and equipped to operate within the system according to the invention;
- Figures 6a and 6b are detailed views of the manipulator in Figure 5;

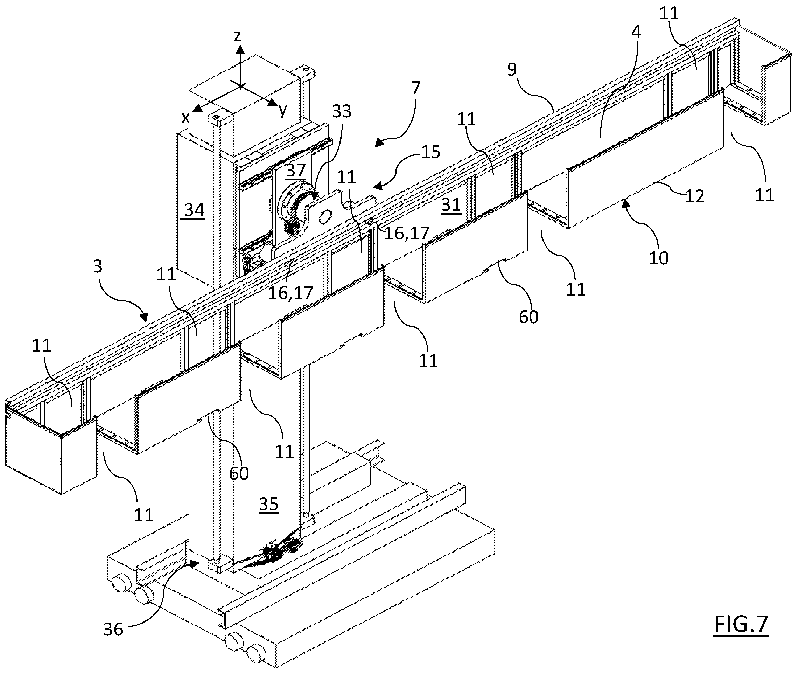

- Figure 7 is an overall perspective three-dimensional view of the components in Figures 3 and 5, shown in their characteristic operative state.
- Figure 8 is an enlarged-scale view of certain details of Figure 7;
- Figures 9a and 9b are perspective three-dimensional views illustrating an operative state transition of the system according to the invention;
- Figures 10 and 11 are perspective three-dimensional views illustration of certain operative phases of the system;
- Figures 12 and 13 are side views of the system illustrating an additional system component shown in two consecutive own operative states;
- Figure 14 is a perspective axonometric three-dimensional view of the component in Figures 12 and 13, shown with some parts removed to better highlight some of its special features;

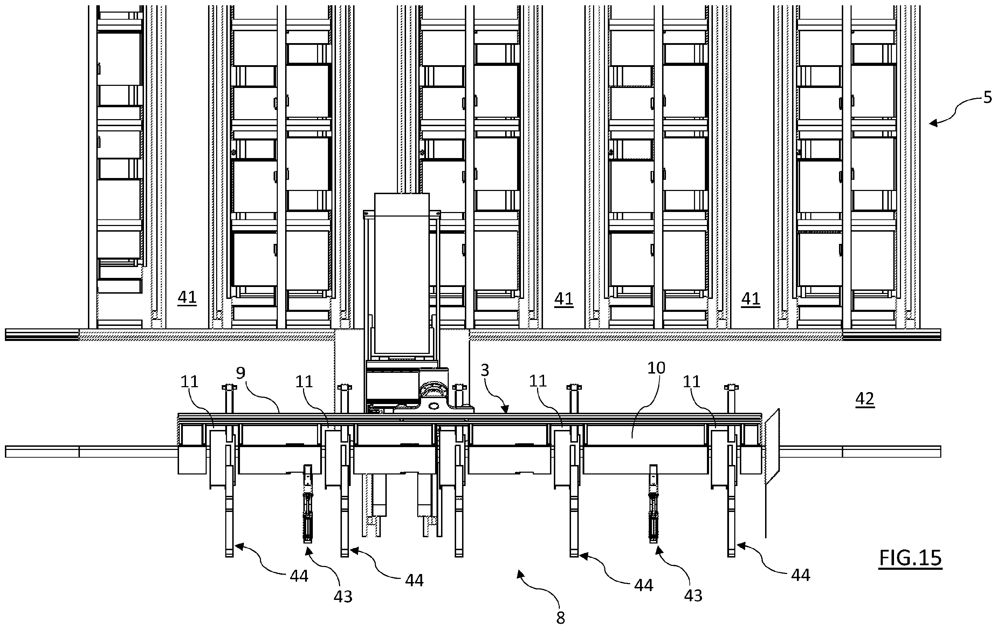

- Figure 15 is a top plan view of the system according to the invention, showing an operative state of the component in Figure 14.

### Best Way to Implement the Invention

With reference to the figures in the accompanying drawings, assigned with reference number (1) is an automated system for the storage of elongated objects such as semi-finished products in bars or in tubes, particularly intended for feeding a user, represented for instance by a lithe-type operative machine tool (2). The system (1) essentially comprises a warehouse (5) wherein have been arranged a plurality of pre-formed crates (3) equipped with essentially parallelepiped-shaped and longitudinally elongated containment cavities (4) complementary to the length of the semi-finished products which it is to contain.

The warehouse (5) includes a modular racking (5s), formed by parallelepiped-shaped cells (6) to accommodate the crates (3).

Inside the cells (6), the crates (3) are oriented with their largest dimension (length) arranged vertically; are ordered according to horizontally developing piles; and are arranged on two substantially parallel piles, which affect a pair of opposing sides of the cell (6); and which are spaced apart from each other by an intermediate lane (41).

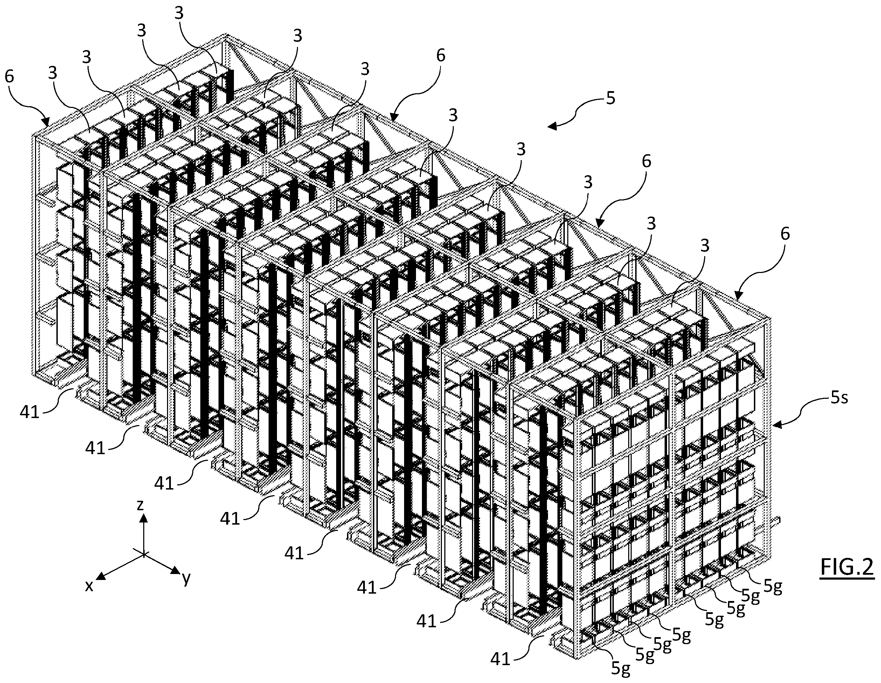

As shown more clearly in Figure 2, adjacent crates (3) of the same horizontal pile are not placed in close contact with each other. Indeed, between each pair of adjacent crates (3) there is actually an empty, intermediate space, identified with reference number (5g), which runs the entire vertical length of the two crates (3) of each pair.

As will become clearer below, the system (1) also comprises special operative means (7) intended to operate with the crates (3) and, more particularly devised to allocate the crates (3) into and out of the cells (6) of the racking (5s); and also comprises transferring means (8) devised for: taking the semi-finished products contained within the crates (3); extracting them and then loading them on itself; in order, ultimately, to make them directly available to be fed to a said operative machine (2) that is to receive them.

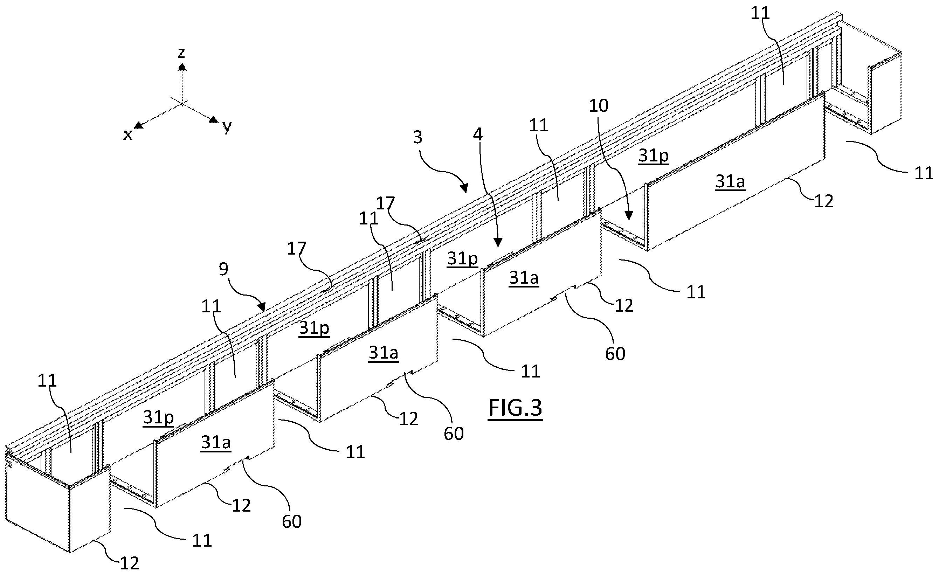

From Figure 3, it can be appreciated, in particular, that the crates (3) essentially comprise a containment body (9) provided with at least one flat, narrow and long base, altogether referenced by (10), which is interrupted in various parts of its length, where it is crossed by some rectangular openings (11) spaced at intervals along the longitudinal line of the crate (3), a line which - according to the orientation in the Figure - is substantially parallel to one of the horizontal lines therein identified by (x).

The openings (11) are preferably extended until they also affect a large part of a pair of counter-facing side walls (31p,31a) of the crate (3), which, together with the base (10), meet to delimit a pair of spatial angles, the vertices of which are identified with reference number (12).

In other words, the containment cavity (4) of the crate (3) has a shape bounded by a three-sided U-shaped outline, equipped with two vertices (12) defining spatial right angles adjacent to the base (10) of the body (9) of the crate (3).

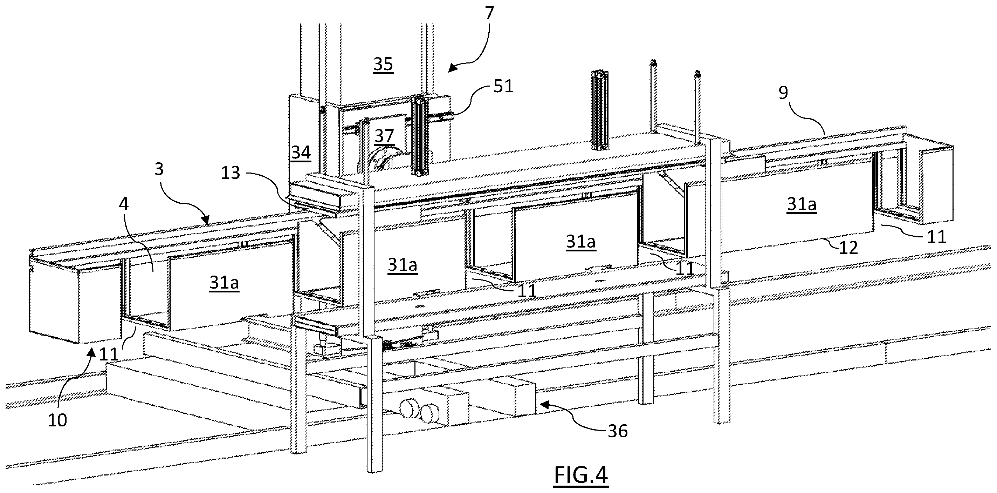

Figure 4 shows that the crate (3) is also provided with a lid (13); as well as means (14) for quickly fastening/releasing the lid (13) onto/from crate (3), or rather to its containment body (9).

The lid (13) - the length of which is preferably such as to only partially cover the containment cavity (4) - performs the function of preventing our elongated objects contained within the crate (3) from falling when the crate (3) is erected in a vertical arrangement and, as such, is then allocated then within the structure of the racking (5s).

In this last regard, it can further be seen that the structure of the racking (5s) can also advantageously feature supplementary supporting means, preferably hooks located in the upper areas of the cells (6) (not shown in the drawings) that allow the crate (3) to be hung from the hooks in a stable vertical arrangement, either with or without the constraining contribution offered by the ground support of the crate (3).

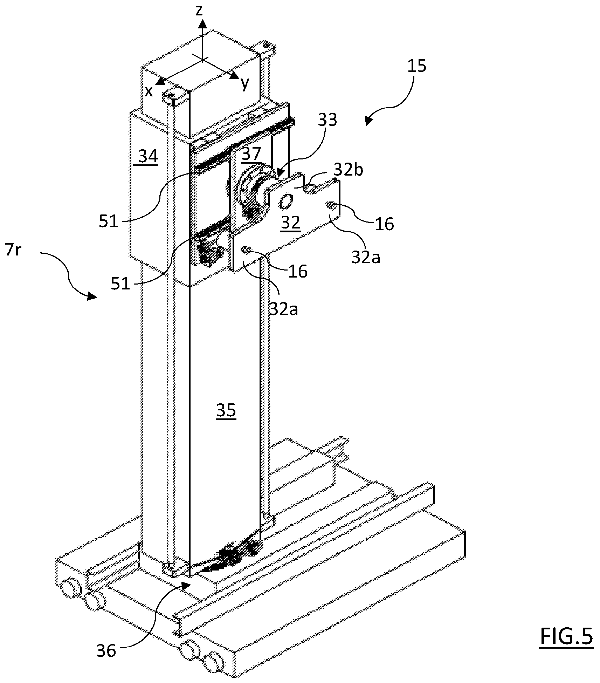

Figure 5 shows that the operative means (7) comprise a robot (7r), preferably of cartesian type, fitted with a terminal effector (15) provided with a pair of pins (16) for fastening and gripping the crates (3), which are rapidly engageable into complementary through-slots (17) borne by one of the side walls (31p) of the crate (3). The operative means (7) also comprise a flat plate (32) with a three-lobed shape, which, at one pair of lobes (32a), bears said pair cantilever pins (16), in a substantially horizontal line (x;y); and which at a third lobe (32b) is supported by a carriage (37) equipped with a member (33) driving the plate (32).

The member (33) supporting and driving the three-lobed plate (32) is motorised revolvably about its own axis of rotation, which, in the arrangement illustrated, is horizontal and parallel to the line (y).

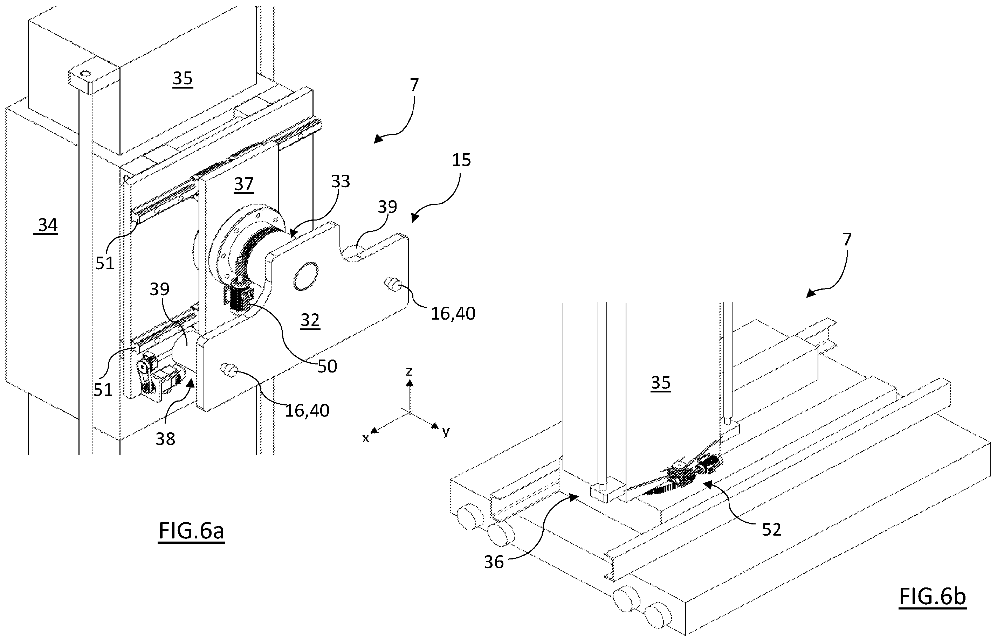

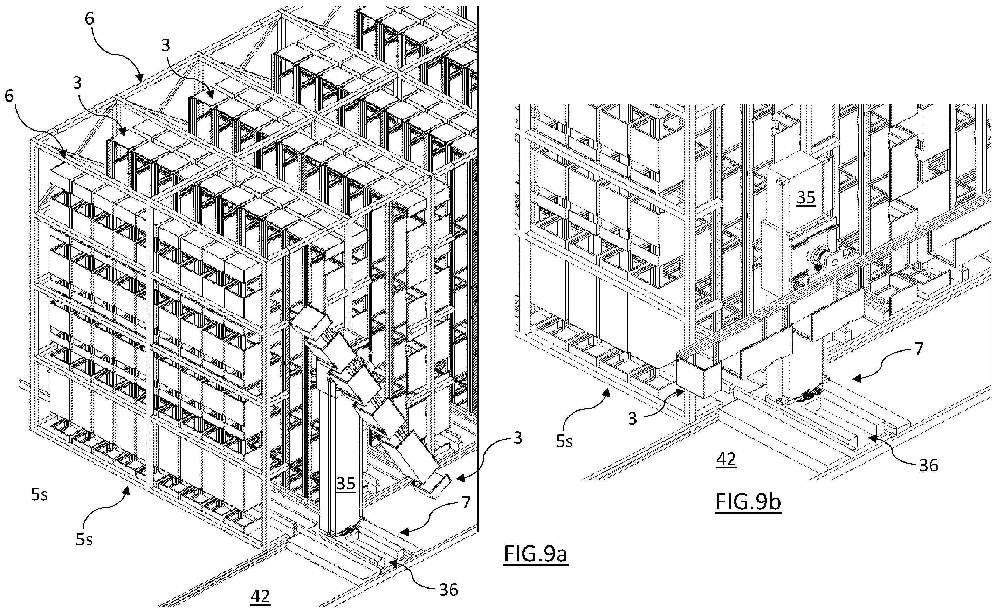

The member (33) is made to rotate by a suitable gearmotor (50) (Figure 6a) so as to implement the orientation of the plate (32) between the vertical and horizontal arrangements of the lobes (32a) pertaining to the pins (16) or of the crates (3) bound to them, as shown in the comparative observation in Figures 9a and 9b.

The three-lobed plate (32) has an own thickness such to allow the plate (32) itself to be inserted into the gaps (5g) that are interposed, thus separating the crates (3) when they are housed within the cells (6) of the rack (5).

The operative means (7) comprise a first carriage (34) supporting the effector (15) and a parallelepiped vertical upright (35), which supports said first carriage (34) in a guide along a line of translation parallel to the vertical line (z).

A second carriage (36), movable relative to the ground and along at least one line of translation parallel to the horizontal line (x), supports the upright (35) at its base and grants it an additional degree of freedom to rotate - by means of a suitable flat motorised roller bearing (52) interposed between said upright (35) and the underlying second carriage (36) - revolvably about a vertical line (z).

The carriage (37), which will be referred to in the following as the third carriage, carries the member (33) supporting the plate (32), being supported in turn by the first carriage (34) with freedom to translate along guides (51) of horizontal translation parallel to the line (x).

The effector (15) also incorporates clamping means generally referenced with (38), which grip the crate (3) and the plate (32) of the effector (15) in a condition of forced mutual planar abutment.

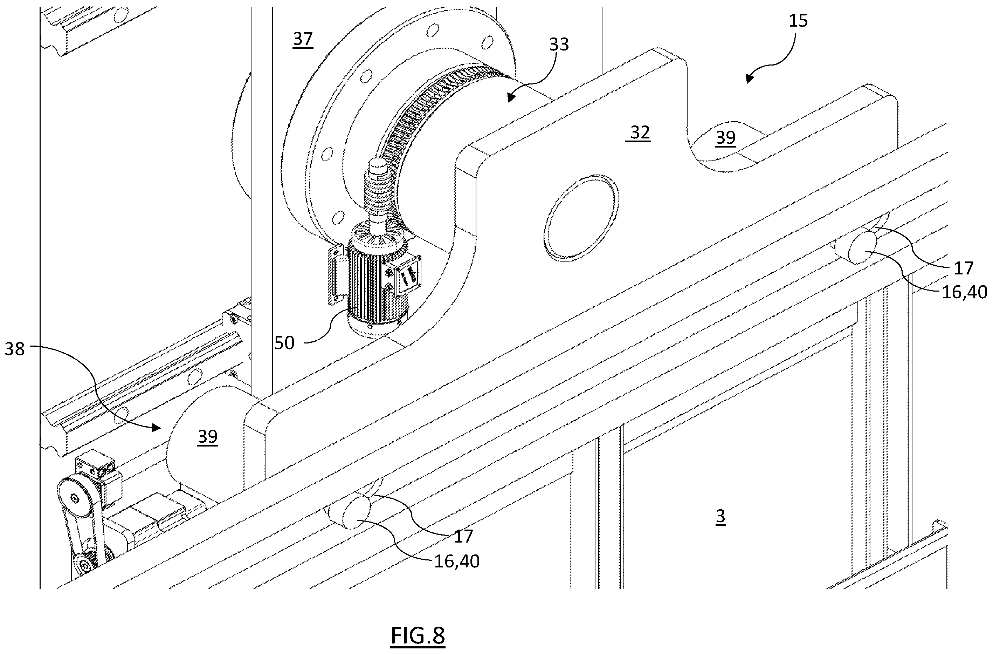

Said clamping means (38), which are better shown in Figure 8, particularly comprise linear actuators (39), devised to drive the pins (16) in traction and in axial thrust, along the line (y).

Since the latter are provided with heads (40) that jut out in a line transversal to the axis of the pins (16), or rather to the linear actuators (39), the actuators (39) themselves are able to bring the crate (3) such that its own wall (31p) comes in direct contact with the three-lobed plate (32) and into forced mutual abutment between them.

As a result of the degrees of freedom they possess, the operative means (7) are able to interact with the warehouse (5), resulting in the ability to move within the racking (5s) and to translate - for instance, along one of the first lanes (41) - by traveling between the horizontally increasing stacks of vertically oriented crates (3) as shown in Figure 2.

Following a suitable rotation command of the upright (35) about the axis (z); a suitable orientation of the plate (32) in an arrangement such that the pins (16) are vertically aligned; and, finally, following the translation of the plate (32) on the guides (51); the plate (32) is inserted between two adjacent crates (3) of a same horizontal pile and placed in a condition where it can fasten to one crate (3), translate it vertically to raise it from the ground, or rather to unfasten it from any fastening means present in the upper part of the racking (5s); and, finally, to transfer it in a retrograde motion to a second lane (42), outside of the warehouse (5) (Figures 9a and 9b), where the arrangement of the crate (3) is progressively transitions from a vertical to a horizontal orientation.

The 90° rotation of the three-lobed plate (32) then brings the pins (16) into an aligned condition such that the crate (3) reaches the horizontal state as shown in Figure 9b.

At this point, the crate (3) (after being freed of the lid (13) through an intermediate step corresponding to the condition in Figure 4) is ready to be transferred to the user.

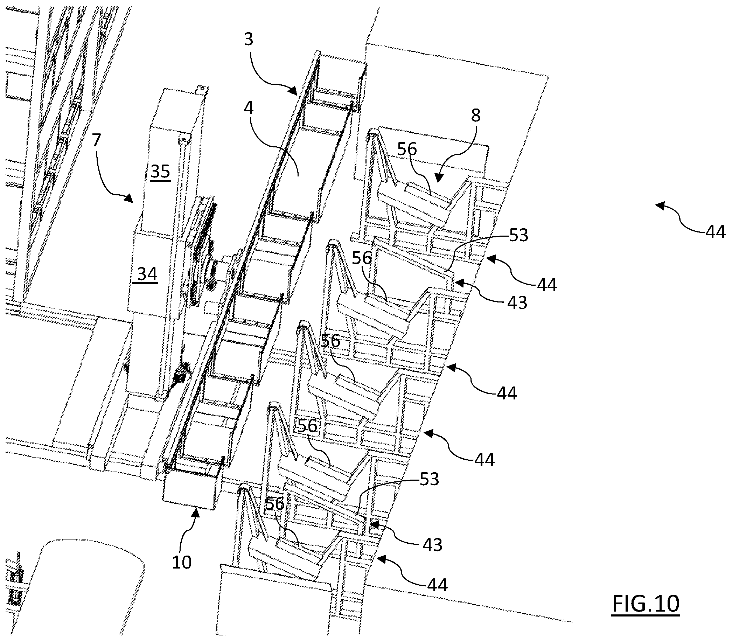

For this purpose, the system (1) foresees, next to each operative machine (2) that receives the products contained in the crates (3), the presence of the aforementioned transferring means (8), which, in particular, comprise (Figure 10) a dual series of mutually alternating movable supports (43) and fixed supports (44).

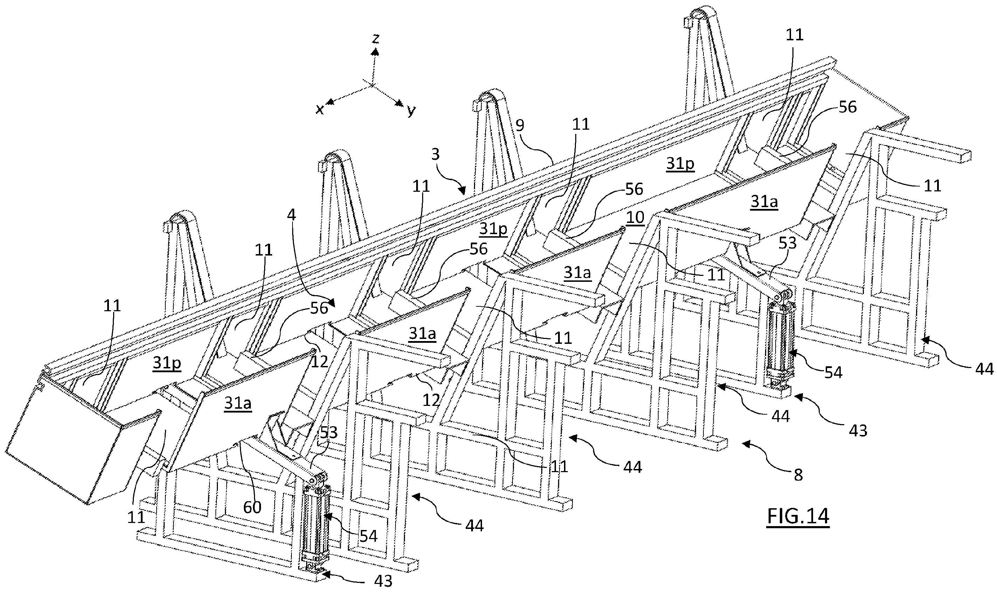

More specifically, the fixed supports (44) (Figure 14) are spaced at intervals along the longitudinal line of the crate (3) (parallel to the horizontal line (x)) so that they can be allocated at the openings (11) of the base (10) and the walls (31p,31a) of the crate (3).

The movable supports (43), on the other hand, are placed at closed partitions of the base (10) of the crate (3) and its walls (31p,31a) bilateral to the base (10); as well as preferably at slotted seats (60) made on the outer faces of the base (10) and walls (31p,31a).

Said supports (43) comprise, in particular, parallelepiped arms (53) articulated to a fixed structure.

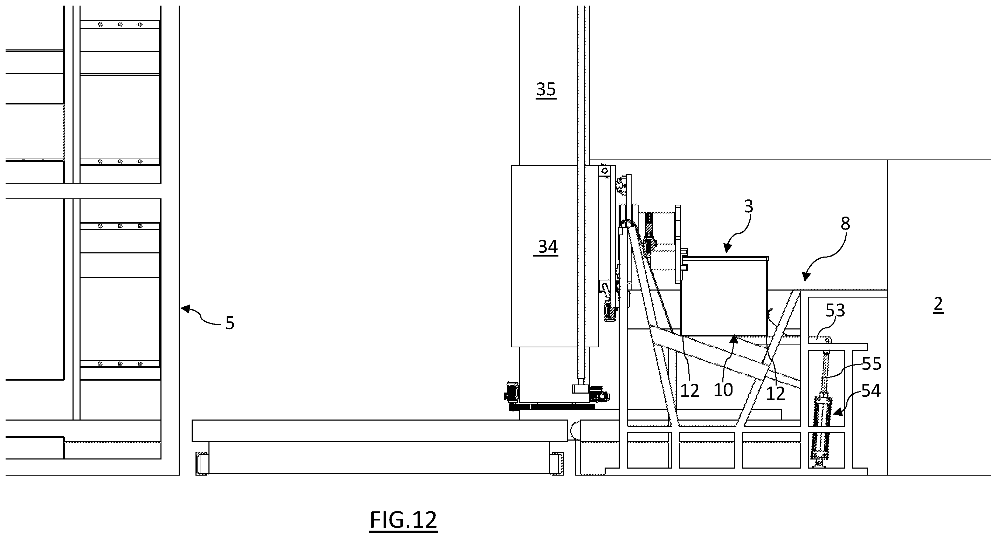

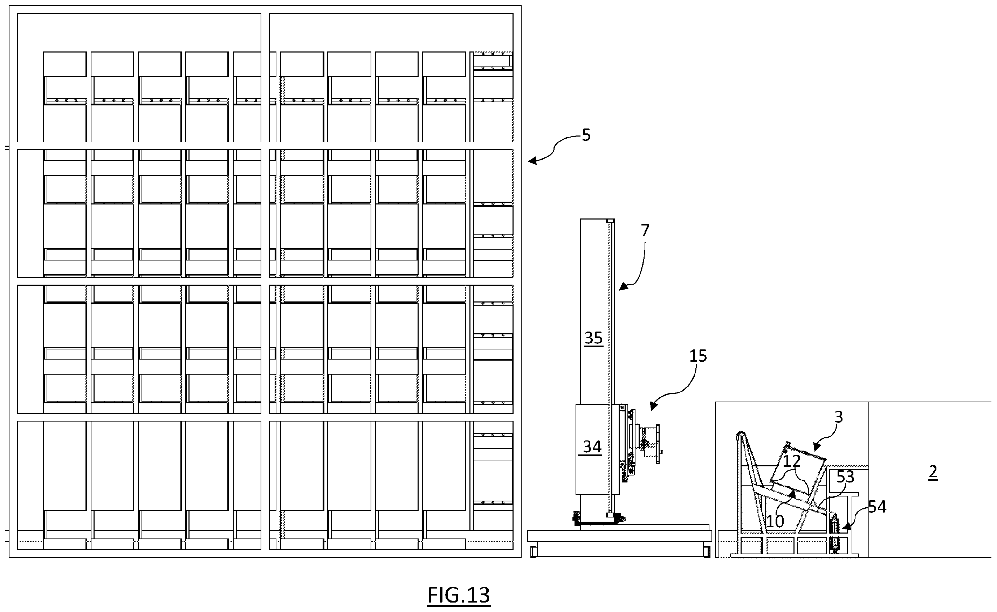

One end of the arms (53) is constrained to a linear actuator (54) so that, as a result of the operative states of the latter - that is, the extended or retracted state of one of its piston rods (55) - the respective arm (53) (which, at the other end, is hinged to the fixed structure) can assume a horizontal arrangement as shown in Figure 12 or an oblique arrangement as shown in Figure 13.

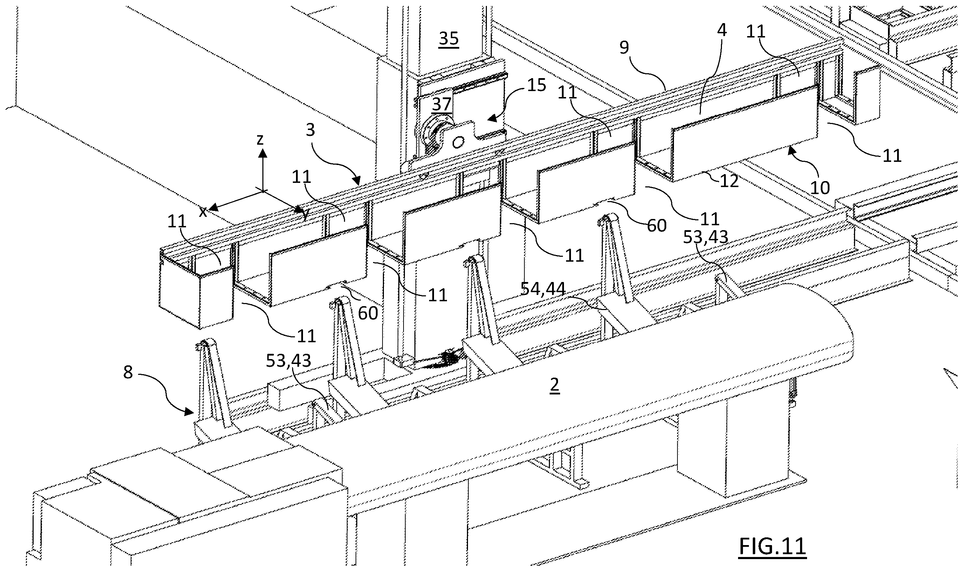

As a result of the function performed by these particular supports (43,44), when the robot (7r) arrives with the crate (3) arranged horizontally in close proximity to the machine tool (2) - as shown in Figures 10 and 11 - the robot (7r) is in a position to be able to release the crate (3) in said horizontal arrangement above the arms (53) of the movable supports (43) that are correspondingly oriented to receive it, as shown in Figure 12.

At this point, by imparting a retraction command to the piston rods (55) of the actuators (54), the crate (3) is gradually brought to rotate angularly about its longitudinal line as shown in Figure 13.

During this transition, the elongated semi-finished products contained in the crate (3) are received by the fixed arms (56) of the fixed supports (44) coming out of the crate (3)

The crate (3), freed in the meantime from the weight of its original contents, can then be slid onto the oblique arms (53) of the movable supports (43) and finally extracted by the manipulator (7r), which, by moving backward, moves away from the supports (43 and 44).

The elongated semi-finished products, supported in the meantime by the fixed supports (44), in positions strictly determined first by the vertices (12) of the crate (3) and then by the shape itself of the fixed supports (44), are then taken from their specific positions and fed toward the machine tool (2) in a conventional way.

The sequence of steps described above refers to an example of feeding materials from the warehouse to the machine tool; this, however, should be understood in a non-limiting sense, since it is clear that by reversing all operational steps the feeding can also involve semi-finished or finished products that go from the machine tool to the storage warehouse with the sequence of motion reversed accordingly.

The invention fully achieves the previously stated purposes and also provides the additional significant benefit of managing its functions in a fully mechanised and automated manner, which enables significant reductions in materials procurement and storage times, and significant economies in the management of operative machines by entire production departments.

## Claims

1. Automated system for storing elongated products that can be fed to, or from, a user (**2**) comprising:
- a plurality of pre-formed crates (**3**) equipped with elongated containment cavities (**4**) complementary to the length of said objects;
- a racking (**5**s), provided with cells (**6**);
- operative means (**7**) devised to allocate the crates (**3**) into and out of said cells (**6**) of the racking (**5**s); **characterised in that**
- said cells (**6**) are devised to accommodate crates (**3**) oriented in a substantially vertical arrangement of the length of said objects; and **in that**
- said operating means (**7**) comprise:
- an effector (**15**) provided with a pair of pins (**16**) for fastening and gripping, which are engageable into complementary through-slots (**17**) borne by a side wall (**31**p) of the crate (**3**);
- a plate (**32**) carrying said pair of cantilever pins (**16**) in a substantially horizontal line (x;y); and
- a member (**33**) supporting and driving said plate (**32**), which is rotatable about a horizontal axis of rotation (x;y), to vary the orientation of the mutual alignment of said pins (**16**) of the plate (**32**) correspondingly.

2. System according to Claim **1, characterised in that** said operative means (**7**) comprise:
- a first carriage (**34**) for supporting said effector (**15**); and
- a vertical upright (**35**), which supports said first carriage (**34**) within a translation guide along a vertical line (z).

3. System according to Claim **2, characterised in that** said operative means (**7**) comprise:
- at least a second carriage (**36**), which supports said upright (**35**) and is movable at least along a horizontal line (x;y) orthogonal to said upright (**35**).

4. System according to Claim **3, characterised in that** said upright (**35**) is rotatably supported by said second carriage (**36**) about a vertically-directed axis of rotation (**z**).

5. System according to Claim **2, characterised in that** it comprises a third carriage (**37**), which bears said supporting member (**33**) of the plate (**32**) and is borne by said first carriage (**34**) within a horizontal translation guide (x).

6. System according to Claim **1, characterised in that** it comprises a clamping means (**38**) for gripping said crate (**3**) and said plate (**32**) in a condition of mutual forced abutment.

7. System according to Claim **6, characterised in that** said clamping means (**38**) comprise linear actuators (**39**) devised to actuate said pins (**16**) in the two directions of its own axial line (y) orthogonal to said plate (**32**), and **in that** said pins (**16**) are provided with heads (**40**) which jut out in a line transversal to said linear actuators (**39**) and which are devised to be coupled by abutment to said wall (**31**p) by crossing relative slots (**17**) in two alternative conditions of, respectively, binding with and unbinding from said crate (**3**).

8. System according to Claim **1, characterised in that** said racking (**5**s) is provided with first lanes (**41**) arranged between horizontal stacks of vertically oriented crates (**3**); along said first lanes (**4**1) said operative means (**7**) are movable in translation along at least one (x;y) horizontal line.

9. System according to Claim **8, characterised by** including at least one second lane (**42**), external to said first lanes (**41**), and at which said operative means (**7**) impose on said crates (**3**) a state transition between the end states of vertical and horizontal orientation, respectively.

10. System according to Claim **1, characterised by** comprising transferring means (**8**), interacting between said racking (**5**s) and said user (**2**) to take said objects by extracting them from the crates (**3**) and transfer them to said user, or vice versa.

11. System according to Claim **1, characterised in that** said crates (**3**) comprise a containment body (**9**), provided with at least one base (**10**), which is equipped with openings (**11**) at intervals along a longitudinal line (x) of the crate (**3**).

12. System according to one of the prior claims, **characterised in that** said crate (**3**) is provided with a lid (**13**) and means (**14**) for quickly fastening/unfastening the lid (**13**) on the crate (**3**).

13. System according to claim **1, characterised in that** said racking (**5s**) comprises supporting means devised to support, in at least partial suspension, said crates (**3**) within the cells (**6**).

14. Method for stocking and feeding elongated objects to a user in an automated system according to any one of the prior claims.

## Patentansprüche

1. Automatisiertes System zur Lagerung länglicher Produkte, die an einen oder von einem Benutzer (**2**) zugeführt werden können, Folgendes beinhaltend:
- eine Mehrzahl vorgeformter Kisten (**3**), die mit länglichen Behälterhohlräumen (**4**), komplementär zur Länge besagter Objekte, ausgestattet sind;
- ein Regalsystem (**5s**), das mit Zellen (**6**) ausgestattet ist;
- Betriebsmittel (**7**), die dazu konzipiert sind, die Kisten (**3**) in und aus besagten Zellen (**6**) des Regalsystems (**5s**) zuzuweisen;
**dadurch gekennzeichnet, dass**
- besagte Zellen (**6**) dazu konzipiert sind, Kisten (**3**) aufzunehmen, die in einer im Wesentlichen vertikalen Anordnung nach der Länge besagter Objekte ausgerichtet sind; und dadurch, dass
- besagte Betriebsmittel (**7**) Folgendes beinhalten:
- einen Effektor (**15**), der mit einem Stiftepaar (**16**) zur Befestigung und zum Ergreifen ausgestattet ist, das in komplementäre, durchgängige Schlitze (**17**) greifen kann, die von einer Seitenwand (**31p**) der Kiste (**3**) getragen werden;
- eine Platte (**32**), die dabei besagtes, herausragendes Stiftepaar (**16**) auf einer im Wesentlichen horizontalen Linie (x;y) trägt; und
- ein Glied (**33**), das dabei besagte Platte (**32**) stützt und führt, das um eine horizontale Rotationsachse (x;y) drehbar ist, um die Ausrichtung der gegenseitigen Anordnung besagter Stifte (**16**) der Platte (**32**) entsprechend zu verändern.

2. Das System nach dem Patentanspruch **1, dadurch gekennzeichnet, dass** besagte Betriebsmittel (7) Folgendes beinhalten:
- einen ersten Wagen (**34**) zur Stützung des besagten Effektors (**15**); und
- einen vertikalen Ständer (**35**), der besagten ersten Wagen (**34**) in einer Verschiebungsführung auf einer vertikalen Linie (**z**) stützt.

3. Das System nach dem Patentanspruch **2, dadurch gekennzeichnet, dass** besagte Betriebsmittel (**7**) Folgendes beinhalten:
- mindestens einen zweiten Wagen (**36**), der besagten Ständer (**35**) stützt und zumindest auf einer horizontalen Linie (x;y) orthogonal zu besagtem Ständer (**35**) beweglich ist.

4. Das System nach dem Patentanspruch **3, dadurch gekennzeichnet, dass** besagter Ständer (**35**) drehbar von besagtem zweitem Wagen (**36**) um eine vertikal gerichtete Rotationsachse (**z**) gestützt wird.

5. Das System nach dem Patentanspruch **2, dadurch gekennzeichnet, dass** es einen dritten Wagen (**37**) beinhaltet, der besagtes Stützmittel (**33**) der Platte (**32**) trägt und von besagtem ersten Wagen (**34**) in einer horizontalen Verschiebungsführung (**x**) getragen wird.

6. Das System nach dem Patentanspruch **1, dadurch gekennzeichnet, dass** es Klemmmittel (**38**) zum Ergreifen besagter Kiste (**3**) und besagter Platte (**32**) in einem Zustand gegenseitig forcierter Anlage beinhaltet.

7. Das System nach dem Patentanspruch **6, dadurch gekennzeichnet, dass** besagte Klemmmittel (**38**) Linearaktoren (**39**) beinhalten, die dazu konzipiert sind, besagte Stifte (**16**) in die zwei Richtungen seiner eigenen Axiallinie (y), orthogonal zu besagter Platte (**32**), zu betätigen, und **dadurch, dass** besagte Stifte (**16**) mit Köpfen (**40**) ausgestattet sind, die auf einer Linie quer zu besagten Linearaktoren (**39**) herausragen und die dazu konzipiert sind, durch Anlage mit besagter Wand **(31p)** verbunden zu werden, indem sie entsprechende Schlitze **(17)** in zwei alternativen Zuständen, der Verbindung mit beziehungsweise der Trennung von, besagter Kiste **(3)** durchkreuzen.

8. Das System nach dem Patentanspruch **1, dadurch gekennzeichnet, dass** besagtes Regalsystem **(5s)** mit ersten Bahnen **(41)** ausgestattet ist, die zwischen horizontalen Stapeln vertikal ausgerichteter Kisten **(3)** angeordnet sind; auf besagten ersten Bahnen **(41)** sind besagte Betriebsmittel **(7)** dabei durch Verschiebung auf mindestens einer (x;y) horizontalen Linie beweglich.

9. Das System nach dem Patentanspruch **8, dadurch gekennzeichnet, dass** es dabei mindestens eine zweite Bahn **(42)** beinhaltet, die außerhalb besagter erster Bahnen **(41)** liegt und auf der besagte Betriebsmittel **(7)** an besagten Kisten **(3)** einen Zustandsübergang zwischen den Endzuständen jeweils vertikaler und horizontaler Ausrichtung bewirken.

10. Das System nach dem Patentanspruch **1, dadurch gekennzeichnet, dass** es dabei Übertragungsmittel **(8)** beinhaltet, die dabei zwischen besagtem Regalsystem **(5s)** und besagtem Benutzer **(2)** interagieren, um besagte Objekte zu nehmen, indem sie sie aus den Kisten **(3)** entnehmen und zu besagtem Benutzer übertragen oder umgekehrt.

11. Das System nach dem Patentanspruch **1, dadurch gekennzeichnet, dass** besagte Kisten **(3)** einen Behälterkörper **(9)** beinhalten, der mit mindestens einem Boden **(10)** ausgestattet ist, der auf einer Längslinie **(x)** der Kiste **(3)** in gewissen Abständen mit Öffnungen **(11)** ausgestattet ist.

12. System nach einem der vorigen Patentansprüche, **dadurch gekennzeichnet, dass** besagte Kiste **(3)** mit einem Deckel (**13**) und Mitteln (**14**) zur raschen Befestigung/Lösung des Deckels (**13**) an der Kiste (**3**) ausgestattet ist.

13. Das System nach dem Patentanspruch **1, dadurch gekennzeichnet, dass** besagtes Regalsystem (**5s**) Stützmittel beinhaltet, die dazu konzipiert sind, besagte Kisten (**3**) in einer zumindest partiellen Aufhängung innerhalb der Zellen (**6**) zu stützen.

14. Verfahren zur Lagerung und Zuführung länglicher Objekte zu einem Benutzer in einem automatisierten System nach jedem der vorigen Patentansprüche.

## Revendications

1. Système automatisé pour stocker des produits allongés qui peuvent être alimentés à, ou depuis, une machine utilisatrice (**2**) comprenant :
- une pluralité de caisses préformées (**3**) équipées de cavités de logement allongées (**4**) complémentaires à la longueur desdits objets ;
- un rayonnage (**5**s), pourvu de cellules (**6)** ;
- des moyens opérationnels (**7**) conçus pour transférer les caisses (**3**) dans et hors desdites cellules (**6**) du rayonnage **(5s)** ;
**caractérisé en ce que**
- lesdites cellules (**6**) sont conçues pour loger des caisses (**3**) orientées dans une disposition essentiellement verticale de la longueur desdits objets ; et **en ce que**
- lesdits moyens opérationnels (**7**) comprennent :
- un effecteur (**15**) pourvu d'une paire de goupilles (**16**) de fixation et de préhension, qui peuvent être engagées dans des fentes traversantes complémentaires (**17**) portées par une paroi latérale (**31**p) de la caisse (**3**) ;
- une plaque (**32**) portant ladite paire de goupilles (**16**) en porte-à-faux dans une direction essentiellement horizontale (x ; y) ; et
- un organe (**33**) supportant et entraînant ladite plaque (**32**), qui peut tourner autour d'un axe de rotation (x ; y) horizontal, pour faire varier l'orientation de l'alignement réciproque desdites goupilles (**16**) de la plaque (**32**) de façon correspondante.

2. Système selon la revendication **1, caractérisé en ce que** lesdits moyens opérationnels (**7**) comprennent :
- un premier chariot (**34**) pour supporter ledit effecteur (**15**) ; et
- un montant vertical (**35**), qui supporte ledit premier chariot (**34**) dans un guide de translation le long d'une direction verticale (z).

3. Système selon la revendication **2, caractérisé en ce que** lesdits moyens opérationnels (**7**) comprennent :
- au moins un deuxième chariot (**36**), qui supporte ledit montant (**35**) et peut se déplacer au moins le long d'une direction horizontale (x ; y) orthogonale audit montant (**35**).

4. Système selon la revendication **3, caractérisé en ce que** ledit montant (**35**) est supporté de façon rotative par ledit deuxième chariot (**36**) autour d'un axe de rotation (**z**) orienté verticalement.

5. Système selon la revendication **2, caractérisé en ce qu'il** comprend un troisième chariot (**37**), qui porte ledit organe de support (**33**) de la plaque (**32**) et est porté par ledit premier chariot (**34**) dans un guide de translation horizontal (x).

6. Système selon la revendication **1, caractérisé en ce qu'il** comprend des moyens de serrage (**38**) pour saisir ladite caisse (**3**) et ladite plaque (**32**) dans une condition de butée réciproque forcée.

7. Système selon la revendication **6, caractérisé en ce que** lesdits moyens de serrage (**38**) comprennent des actionneurs linéaires (**39**) conçus pour actionner lesdites goupilles (**16**) dans les deux sens de leur propre direction axiale (y) orthogonale à ladite plaque (**32**), et **en ce que** lesdites goupilles (**16**) sont pourvues de têtes (**40**) qui dépassent dans une direction transversale auxdits actionneurs linéaires (**39**) et qui sont conçues pour être accouplées par mise en butée à ladite paroi (**31**p) en passant à travers des fentes (**17**) correspondantes dans deux conditions alternatives de, respectivement, assujettissement avec et désassujettissement de ladite caisse (**3**).

8. Système selon la revendication **1, caractérisé en ce que** ledit rayonnage (**5**s) est pourvu de premières voies (**41**) disposées entre des piles horizontales de caisses (**3**) orientées verticalement ; le long desdites premières voies (**41**), lesdits moyens opérationnels (**7**) peuvent se déplacer en translation le long d'au moins une direction horizontale (x ; y).

9. Système selon la revendication **8, caractérisé en ce qu'**il comprend au moins une deuxième voie (**42**), extérieure auxdites premières voies (**41**), et au niveau de laquelle lesdits moyens opérationnels (**7**) imposent sur lesdites caisses (**3**) une transition d'état entre les états terminaux d'orientation, respectivement, verticale et horizontale.

10. Système selon la revendication **1, caractérisé en ce qu'il** comprend des moyens de transfert (**8**) qui interagissent, entre ledit rayonnage (**5**s) et ladite machine utilisatrice (**2**), pour prélever lesdits objets en les sortant des caisses (**3**) et les transférer à ladite machine utilisatrice, ou vice versa.

11. Système selon la revendication **1, caractérisé en ce que** lesdites caisses (**3**) comprennent un corps de logement (**9**), pourvu d'au moins une base (**10**), qui est équipée d'ouvertures (**11**) disposées à intervalles le long d'une direction longitudinale (x) de la caisse (**3**).

12. Système selon l'une des revendications précédentes, **caractérisé en ce que** ladite caisse (**3**) est pourvue d'un couvercle (**13**) et de moyens (**14**) pour fixer/libérer rapidement le couvercle (**13**) sur/de la caisse (**3**).

13. Système selon la revendication **1, caractérisé en ce que** ledit rayonnage (**5s**) comprend des moyens de support conçus pour supporter, dans au moins une suspension partielle, lesdites caisses (**3**) à l'intérieur des cellules (**6**).

14. Procédé pour stocker et alimenter des objets allongés à une machine utilisatrice dans un système automatisé selon l'une quelconque des revendications précédentes.
